# EUROPEAN PATENT APPLICATION

(11) **EP 1 527 675 A1**
(43) Date of publication of application: **04.05.2005**
(21) Application number: 03078639.6
(22) Date of filing: 31.10.2003
(51) Int. Cl.: A01G 1/04, A01D 45/00

(54) **Device for harvesting horticultural products cultivated in cultivating racks**

(71) Applicant: International Cultivate BVBA., 9991 Adegem (BE)
(72) Inventor: Hoekstra, Jan Jouke, 9991 Adegem (BE)
(74) Representative: Valkonet, Rutger

(57) **Abstract**

The invention relates to a device for use in cultivating facilities, for example for the harvesting in containers of horticultural products, such as mushrooms, cultivated in cultivating racks (1), which device comprises a support structure (3,8) that can be movably suspended from at least one guide (2) fixed to the cultivating rack (1), as well as a working platform (5) mounted in the support structure (3,8), which can be adjusted for height by driving means.

The object of the invention is to provide an improved device of the aforesaid kind, which on the one hand creates more ergonomic working conditions, which improved working conditions in turn make it possible to realise a greater harvesting productivity.

According to the invention, the device is characterized in that the support structure (3,8) comprises a vertically extending frame (30) for accommodating stacked containers (40) filled with the harvested cultivated horticultural products.

## Description

The invention relates to a device for use in cultivating facilities, for example for the harvesting in containers of horticultural products, such as mushrooms, cultivated in cultivating racks, which device comprises a support structure that can be movably suspended from at least one guide fixed to the cultivating rack, as well as a work platform mounted in the support structure, which can be adjusted for height by driving means.

Dutch patent application No. 91/01020, for example, discloses a device as referred to in the introduction. A large part of the work in cultivating facilities, such as greenhouses, is still manual work. The reason for this is on the one hand the fact that no machines are available yet for the type of work in question, whilst on the other hand the limited amount of space in the greenhouses renders the use of horticultural machines virtually impossible.

Since cultivating establishments or greenhouses are costly installations as regards to construction and maintenance, market gardeners try to utilise the available ground area as effectively as possible, preferably making the major part thereof available for cultivating all kinds of horticultural products, among which mushrooms. In order to achieve an optimally effective utilisation of the available ground area, so-called cultivating racks are used, especially in mushroom cultivation, which racks are built up of several, five to six, cultivating beds positioned one above another. In the cultivating beds, the spores for the mushrooms to be cultivated are seeded, and at the end of the growing period the cultivated mushrooms are harvested from the beds.

A device as referred to in the introduction and as disclosed in NL-91/01020, for example, is used in particular for harvesting. To that end the cultivating rack comprises a guide rail, from which the support structure of the device can be movably suspended. The guide rail is mounted to the upper side of the cultivating rack and extends in horizontal direction along the entire length thereof. The support structure supports a work platform for the horticultural workers. The work platform is adjustable for height. This makes it easy for said workers to reach the cultivating beds positioned at different levels in the cultivating racks, for example for carrying out maintenance work or for harvesting the horticultural products in question. In the embodiment that is disclosed in NL-91/01020, the work platform is guidably suspended from hoisting cables in the support structure.

Once a particular section of the cultivating bed has been worked by the personnel in question, the entire device must be moved over the guide rail to a next section of the cultivating bed at the same level of the cultivating rack. To this end, the device is moved along the cultivating rack by pulling the device ahead by hand.

Generally a large number (20-30) of empty containers or crates stacked on top of each other are placed on the work platform, which containers are to be filled with the harvested cultivated horticultural products by the personnel (one or more persons) present on the work platform. On the one hand these containers seriously interfere with the freedom of movement of the personnel present on the work platform. On the other hand the staff member in question has to spend a considerable amount of time on moving, arranging, rearranging and unloading empty and filled containers.

More in particular, in order to realise an optimum utilisation of the working area on the work platform, the staff member must move each filled container to the bottom of the stack so as to be able to use the container that is present under the filled container in the stack. This means that the harvesting work must be frequently interrupted for picking up and moving (stooping) filled containers, which stooping is not considered to be an ergonomically sound activity, given the weight of the containers.

Furthermore, other staff members frequently have to assist in moving and discharging the filled containers from the support structure and supplying empty containers, during which activities said staff members are unable to carry out harvesting work.

All in all, the ergonomically unsound working conditions and the labourious handling of empty and filled containers (by one or more staff members) has an adverse effect on the efficiency with which the harvesting work is carried out.

The object of the invention is to obviate the above drawbacks and to provide an improved device of the aforesaid kind, which on the one hand creates more ergonomic working conditions, which in turn make it possible to realise a greater harvesting productivity.

According to the invention, the device is characterized in that the support structure comprises a vertically extending frame for accommodating stacked containers filled with the harvested cultivated horticultural products.

In this way space is created on the work platform, which leads to an improved working comfort and more ergonomic working conditions for the personnel present on the platform. The personnel present on the work platform furthermore needs to spend less time on moving, arranging and rearranging empty and filled containers, since the filled containers can be placed directly into the frame, clear of the direct working area. Because it is no longer necessary to carry out ergonomically unsound operations, more ergonomic working conditions are created, which will eventually result in an improved (higher) harvesting productivity.

According to the invention, the frame accommodates a vertically movable supporting surface for the stack of containers, which, in a specific embodiment, is movable in downward direction under the influence of the weight of the containers stacked thereon.

The supporting surface can be moved as far down as the floor of the cultivating facility, which on the one hand has a positive effect on the stacking capacity of the frame and on the other hand makes it easier to unload the stack of filled containers from the frame, for example by means of a handtruck or other device.

In a specific embodiment, the frame is provided with guides for the vertically movable supporting surface so as to enable a smooth movement of the supporting surface.

According to a specific aspect of the invention, the supporting surface can be moved in upward direction by return means. This makes it possible to move the supporting surface upwards again from its lowermost position, for example to the level of the cultivating bed where the staff member is working.

Said return means may comprise at least one spring or at least one air cylinder.

In this latter embodiment, the frame is advantageously embodied as a hollow frame, and said at least one air cylinder is in communication with the hollow frame, which functions as a reservoir for compressed air. More in particular, an adjustable pressure valve is fitted between said at least one cylinder and said hollow frame, which pressure valve can be opened temporarily under the influence of the weight of a container filled with the harvested horticultural products for the transfer of air from the air cylinder to the hollow frame.

In addition to that, the frame comprises a controllable discharge valve for discharging air from the frame to the air cylinder for the purpose of moving the supporting surface in upward direction.

The above-described pneumatic embodiment enables repeated use of the frame in a very efficient and autonomous manner during the harvesting operations. Since the frame forms a closed pressure system together with the air cylinder, the need to use additional heavy, costly and complex compressed air means, such as a compressor, is eliminated. Consequently, the frame does not require any external power supply sources, but it is capable of functioning autonomously. Thus, the radius of action of the support structure and the frame is not significantly limited because of the necessity to use power supply cables etc.

Since a closed pressure system is used, the loss of pressure in the reservoir is minimal, so that prolonged operation of the frame is possible. After the stack of filled containers has been removed, the air that has been "pumped" into the frame from the air cylinder is utilised again for moving the empty supporting surface in upward direction.

According to the invention, in order to obtain a stable stacking of the filled containers, the supporting surface occupies a slightly inclined position with respect to the horizontal plane in the frame. Thus, the stack of filled containers is slightly inclined in rearward direction towards the cultivating rack, so that the stack of filled containers is prevented from toppling over. Such unforeseen toppling over of the stack of filled containers may occur especially while the support structure is being moved in horizontal direction along the cultivating rack. The inclined position of the supporting surface prevents this.

Said toppling over of the stack of filled containers can furthermore be prevented in that, more specifically, the supporting surface is provided with at least one spacer for the stack of containers. To that end the lowermost, filled container must be placed in a slightly forward position on the supporting surface, so that the stack will automatically slope rearwards in the frame, in the direction of the cultivating rack, as it becomes higher.

In a specific embodiment, the frame is open on the side remote from the cultivating rack, which enables removal of the stack of filled containers by a staff member other than staff members present on the work platform.

According to the invention, a more versatile use of the frame can be obtained if the frame can be detachably connected to the support structure.

The invention also relates to a frame suitable for use in a device as referred to in the introduction and as described above and defined in the claims.

The invention will now be explained in more detail with reference to a drawing, in which:
Figure 1 shows a device according to the prior art;
Figure 2 it is a view of an embodiment of the device according to the invention;

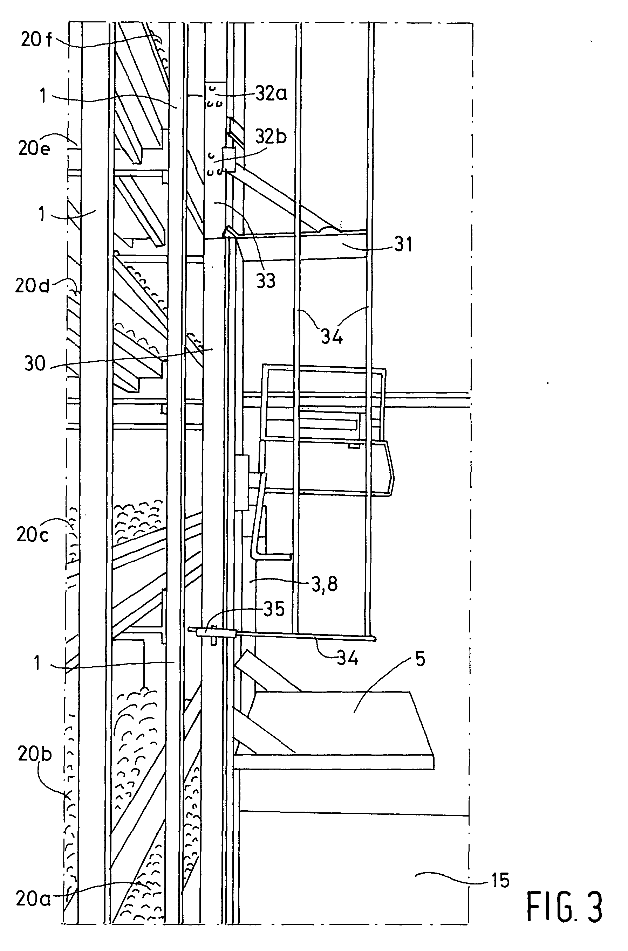

Figure 3 is a side elevation of the embodiment that is shown in Figure 2;
Figures 4A and 4B are partial views of the embodiment that is shown in Figures 2 and 3;
Figures 5A-5D are a front view and partial views of the embodiment that is shown in Figures 2-4; and
Figures 6, 7 and 8 are further views of the embodiment according to the invention.

For a better understanding of the invention, like parts are indicated by the same numerals in the following description of the Figures.

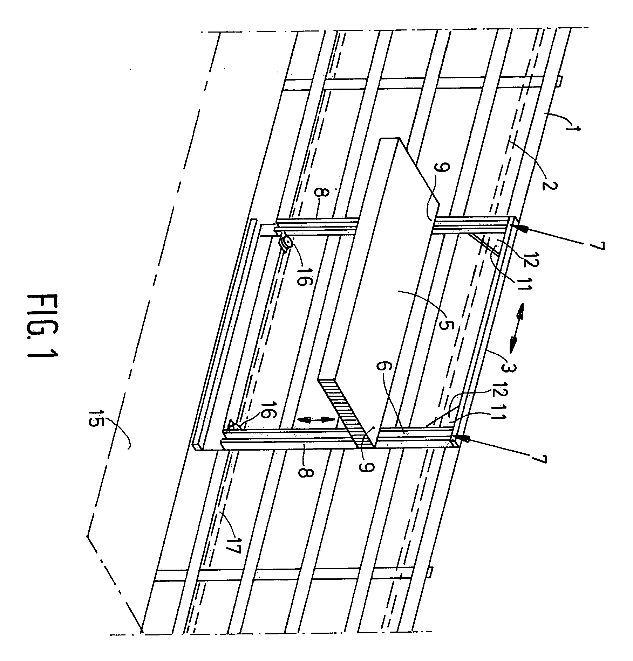

Figure 1 shows a device for harvesting cultivated horticultural products for use in a cultivating facility according to the invention. As already said in the introduction, cultivating facilities frequently comprise cultivating racks 1 consisting of a spatial structure of vertical and horizontal members, which racks are disposed on the ground surface 15. Several cultivating beds 20a-20e are arranged one above another in the rack 1, in which cultivating beds the spores of the mushrooms to be cultivated are seeded, for example. At the end of the growing period the mushrooms are harvested from the cultivating beds 20a-20e.

When harvesting, use is made of a known harvesting device, an example of which is shown in Figure 1. The known harvesting device consists of a support structure 3, which can be suspended, via a guide rollers 12, from at least one guide 2 attached to the cultivating rack 1. To this end tie plates 11 are mounted in the support structure 3 in this embodiment, to which tie plates the guide rollers 12 are attached.

Near the ground surface 15, the cultivating rack 1 is provided with a further guide rail 17, against which the frame 3 is supported via guide rollers 16. This makes it possible to move the entire support structure 3 by hand in horizontal direction above the ground surface 15, along the cultivating rack 1 and the cultivating beds 20a-20e.

As is clearly shown in Figure 1, the harvesting device comprises a work platform 5, which can be moved in vertical direction along the uprights 8 of the support structure 3 by suitable operating means. To this end the uprights 8 of the support structure 3 are provided with a guide 7, in which guide wheels 9 (not shown) mounted to the work platform 5 are guided.

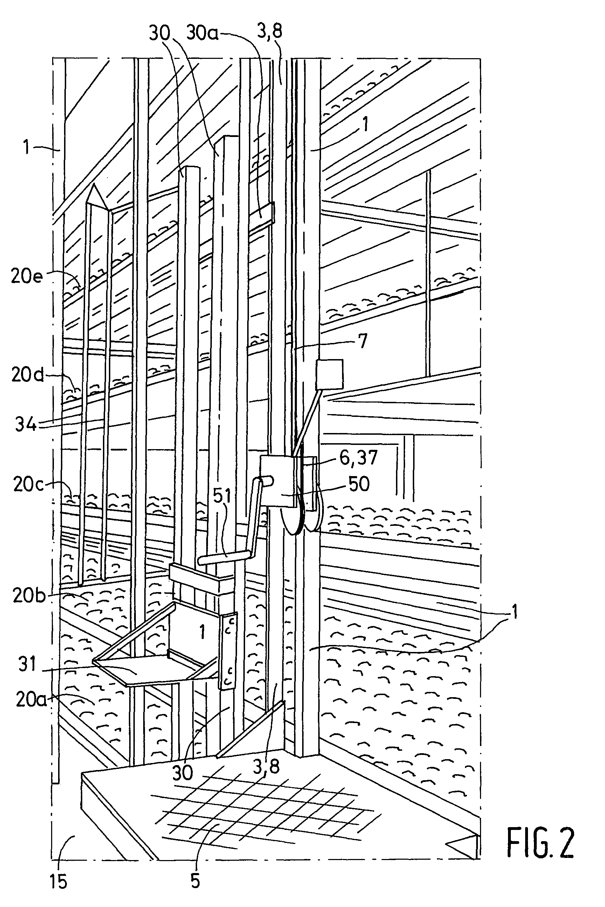

The harvesting personnel can move the work platform 5 in vertical direction along the cultivating rack 1, using suitable driving means such as a cable 6, 37 and a pulley mechanism 50, 51 (see Figure 2), and thus position it at the desired working level with respect to one of the cultivating beds 20a-20e. The harvesting personnel present on the work platform 5 can thus reach the cultivating beds 20e, 20d and 20c for harvesting the cultivated horticultural products, such as mushrooms, at those levels, too.

An important drawback of the currently known device as shown in Figure 1 is the limited amount of working space that is available on the work platform 5. More specifically, the products being cultivated in the cultivating beds 20a-20e must be collected in so-called harvesting crates or containers, which containers, stacked one on top of another, are also present on the work platform 5.

The harvesting activities of the harvesting personnel thus involve frequent shifting, picking up and putting down of empty or full containers, which is not very pleasant from an ergonomic viewpoint, considering the physical exertions these activities involve. The work platform is also used for accommodating waste containers for collecting product waste and products that are not suitable for being harvested, for example because of decay.

On the one hand this seriously interferes with the freedom of movement of the harvesting personnel present on the work platform 5, and on the other hand the staff members in question have to spend a considerable amount of time on moving, arranging and rearranging empty and filled containers while harvesting. More specifically, in order to realise an optimum utilisation of the working area on the work platform 5, the harvesting personnel must move each filled container to the bottom of a stack of containers so as to be able to use the container present under the filled container in the stack for harvesting. Said moving, arranging and rearranging of empty and filled containers are not considered and experienced to be ergonomically sound activities.

In order to improve the working conditions of the personnel on the work platform 5 and furthermore increase the harvesting productivity while using the existing harvesting device, the existing harvesting device is according to the invention fitted with a vertically extending frame for accommodating stacked containers filled with the cultivated horticultural products that are being harvested.

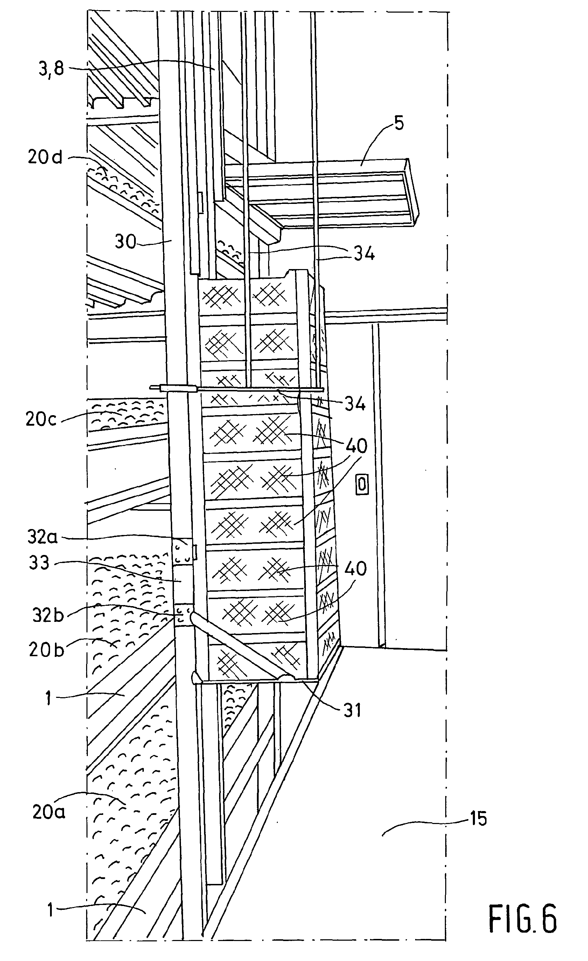

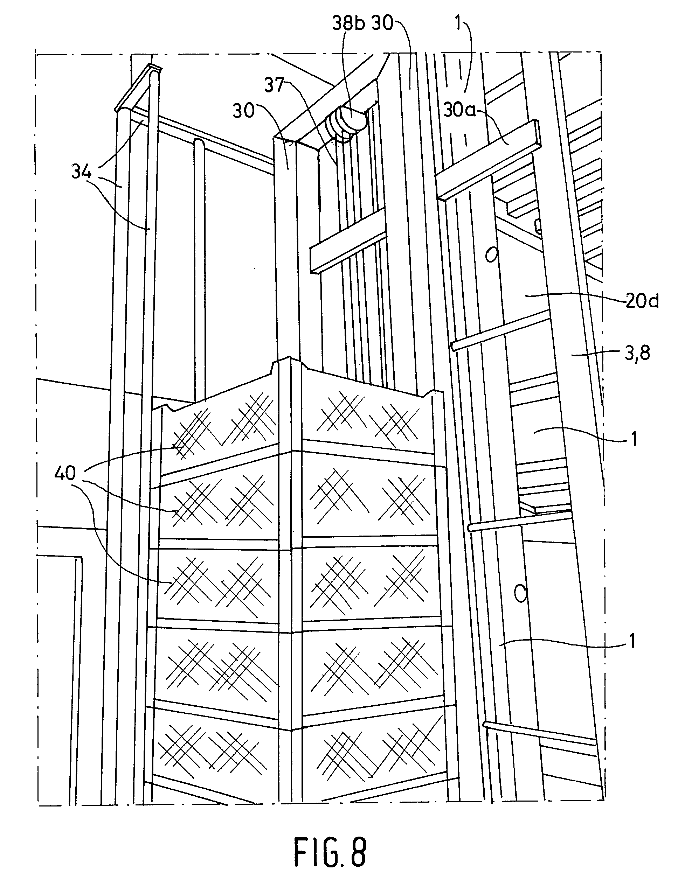

One embodiment of such a harvesting device according to the invention is shown in Figure 2. The support structure 3, 8 is provided with a vertically extending frame 30 comprising a vertically movable supporting surface 31 for the containers 40 (see Figure 6, 7 or 8). The frame 30 is provided with guides (not shown) for guiding the movement in vertical direction of the supporting surface 31, which guides mate with guide wheels 32a-32b, which are mounted on a guide plate 33 forming part of the supporting surface 31. The guide plate 33 can be fitted around the frame 30.

The frame 30 as a whole is connected to the support structure 3, 8 of the harvesting device by means of horizontal members 30a-30b (see Figure 5A).

Referring to Figures 6, 7 and 8, the frame 30 is provided with a guide for the stack of containers 40, which guide is indicated by numeral 34 in Figure 2. The container guide 34 is connected to the frame 30 by means of hinges 35 and can thus be swung aside, for example for removing the stack of filled containers 40 present on the supporting surface 31.

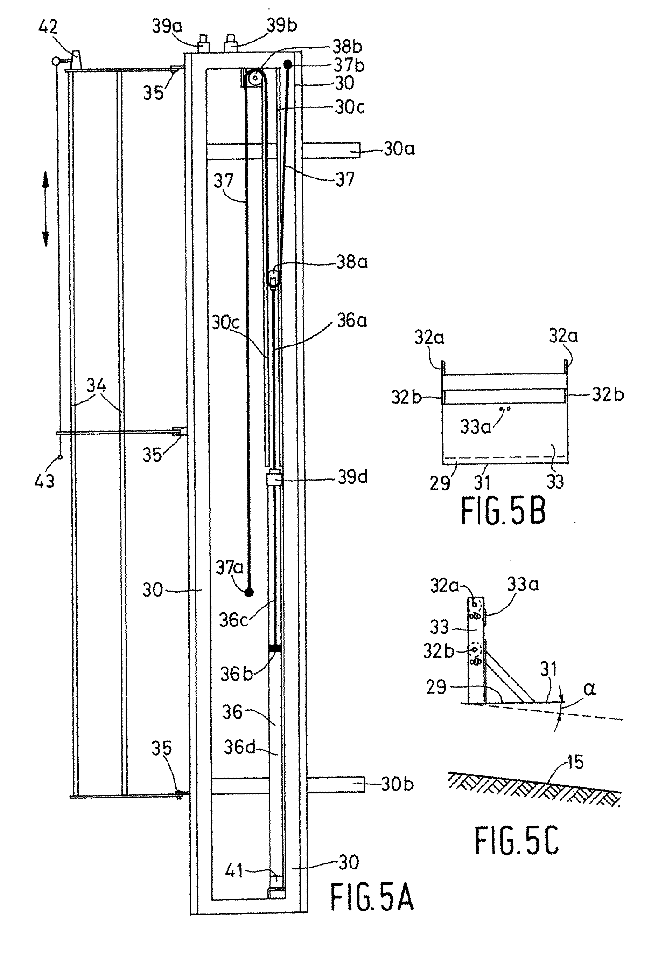

According to the invention, the supporting surface 31 is movable in downward direction along the frame 30, via guide wheels 32, under the influence of the weight of the stacked containers present on the supporting surface. More specifically, the supporting surface 31 is connected to a first end of a cable 37 near a point indicated by numeral 33a (see Figures 5A and 5B). The cable 37 is passed over a first pulley 38b, which is mounted at the top of the frame 30, and a second pulley 38a, and at its other end 37b said cable is fixedly connected to the frame 30.

The second pulley 38b is mounted on the end of a piston rod 36a of an air cylinder 36. The piston rod 36a is connected to a piston 36b, which is movable within the air cylinder 36, thus dividing the cylinder 36 into a pressure chamber 36c and a pressureless chamber 36d. A vent 41 ensures that an atmospheric pressure prevails in the pressureless chamber 36d. The second pulley 38b is mounted in a guide 30c of the frame 30.

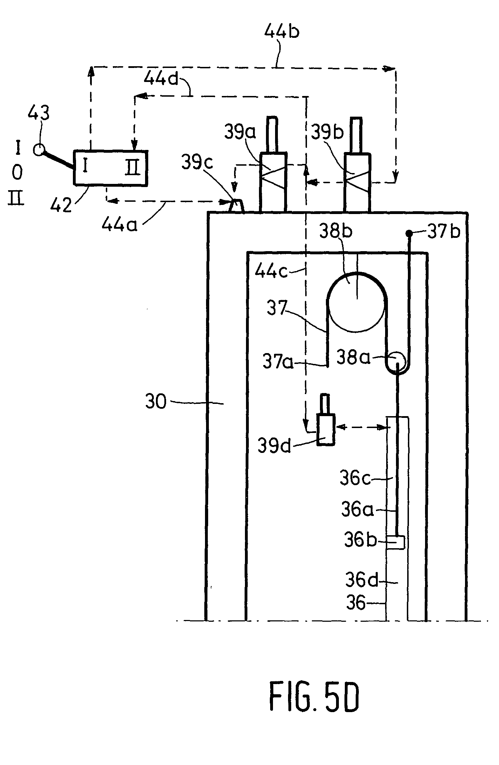

In order to prevent the supporting plate 31 from moving downwards directly under the influence of the force of gravity and the weight of a filled container 40 present on the supporting surface 31, the supporting surface 31 experiences a counterforce, which counterforce must be overcome by the weight of a filled container 40 present on the supporting surface 31. This mechanism is effected by a pneumatic system, which will now be explained with reference to Figure 5D.

Numeral 39d in Figure 5A indicates a two-away flow regulator (adjustable throttle). Numeral 42 indicates a three-position pneumatic manifold, whilst numeral 39c indicates a charging valve. Numeral 39a indicates a one-way high-pressure regulator (e.g. 7 bar), and numeral 39b indicates a one-way low-pressure regulator (e.g. 2 bar).

According to the invention, the frame 30 is hollow and thus functions as a reservoir for compressed air, which reservoir can be filled and pressurised via the charging valve 39c (operating pressure 2-3 bar, maximally 7-8 bar). The whole frame 30 is preferably built up of welded-together, hollow aluminium sections, and it is charged with air to a pre-pressure of 2-3 bar via the charging valve 39c. The empty supporting surface is moved upwards by setting the manifold 42 to the **I** position by means of the lever 43. The air can now flow from the hollow frame 30, via the charging valve 39c, the air line 44a, the manifold 42 and the air line 44b, in the direction of the low-pressure regulator 39b, and thus fill the pressure chamber 36c to an operating pressure of 2-3 bar via the air line 44c and the throttle 39d. As a result, the piston 36b is forced downwards and the supporting surface 31 is moved upwards by the pulley mechanism 38a-38b.

The double-action pulley mechanism converts a movement of the piston 36b into a movement of the supporting surface over a distance twice as large, so that the supporting surface can be moved 2 m in vertical direction with a maximum length of stroke of the piston 36b of 1 m.

If the manifold 42 is in the **0** position, the pneumatic system as hown in Figure 5D will operate via the two pressure regulators 39a and 39b. In order to prevent the supporting plate 31 from moving downwards directly under the influence of the force of gravity and the weight of a filled container 40 present on the supporting surface 31, the supporting surface 31 experiences a counterforce, which counterforce must be overcome by the weight of a filled container 40 present on the supporting surface 31. This counterforce is the pre-set pressure of the high-pressure regulator 39b.

The supporting surface 31 wants to move downwards under the influence of the weight of a filled container 40, which weight, being transmitted via the cable 37 and the pulleys 38a-38b, causes the piston 36b to move upwards. As a result, the pressure in the pressure chamber 36c increases. The pressure increase in the pressure chamber 36c can only be transmitted to the hollow frame 30 via the air line 44c if the pressure increases to a level such that the high-pressure regulator 39a opens. After all, the low-pressure regulator 39b is in the shut-off position (see the direction of flow of the regulator 39b) and the air line 44d is closed (position **II** of the manifold 42).

In other words, an increase in the weight being exerted on the supporting surface 31 will result in a downward movement of the supporting surface 31 and a pressure increase in the pressure chamber 36c. If said pressure increases is large enough to open the high-pressure regulator 39a, air will flow from the pressure chamber 36c into the hollow frame 30 via the throttle 39d, the air line 44c, the pressure regulator 39a and the charging valve 39c. The high-pressure setting of the pressure regulator 39a prevents the supporting surface 31 from moving downwards over a relatively large distance each time the weight increases.

Generally, the harvesting personnel will start harvesting at the uppermost cultivating bed 20f, so that downward movement of the supporting surface 31 with the filled container 40 at an early stage is undesirable. First the number of containers forming the stack of filled container 40 on the supporting surface must increase by a number of containers before their joint weight causes the pressure regulator 39a to open briefly so as to allow the pressure chamber 36c to vent air into the hollow frame 30.

After said brief venting, the high-pressure regulator 39a will close automatically, so that the pressure in the pressure chamber 36c will first have to increase again (under the influence of the weight of a next number of filled containers being placed on the stack) before venting is possible again. The harvesting personnel can thus set the pressure level at which the supporting surface 31 with the containers 40 will move down by adjusting the high-pressure regulator 39a.

When this construction is used, the supporting surface 31 will move downwards along the frame 30 towards the ground surface each time a new filled container 40 is placed thereon. The air is slowly forced out of the pressure chamber 36c of the air cylinder and pumped to the hollow frame 30 via the throttle 39d, the high-pressure regulator 39a and the charging valve 39c, which hollow frame 30 has a larger internal volume than the pressure chamber 36c.

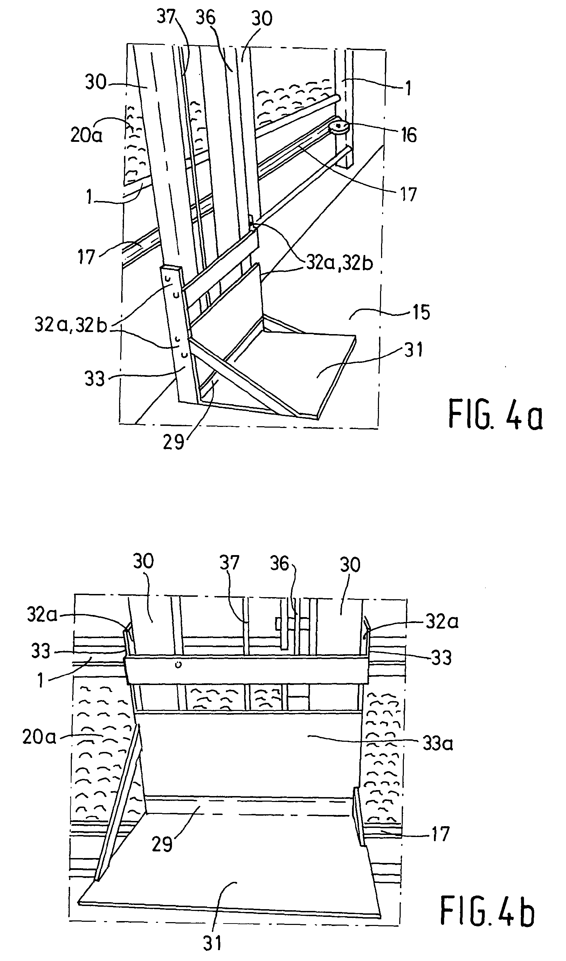

When harvesting is started, the supporting surface 31 is positioned at the top of the frame 30, but the supporting surface 31 will move down under the influence of the weight of the filled containers 40 being stacked thereon until it is positioned just above or on the ground surface 15, as is shown in Figure 4A. After the container guide 34 has been swung aside, the stack of filled containers 40 (which may reach a height of eighteen to twenty containers) can easily be removed from the supporting surface 31 by means of a handtruck or other device and be discharged from the cultivating facility for further processing.

A staff member can push the supporting surface 31 supporting the stack of filled containers 40 downwards onto the floor 15 by hand, resulting in practically all the air being forced into the hollow frame 30 via the high-pressure regulator 39a.

Although practically all the air has been forced out of the pressure chamber 36c under the influence of the weight of the stack of containers 40 present on the supporting surface 31, a high pressure still prevails in the air line 44c (and the air line 44d) extending from the pressure chamber 36c to the high-pressure regulator 39a, which pressure is not high enough to open the high-pressure regulator 39a, however. When the stack of filled containers 40 is removed from the supporting surface 31, the weight load on the piston 36b is released and the high pressure prevailing in the air line 44c, acting as a reaction force, will cause the piston 36b to move downwards, as a result of which the supporting surface 31 will move upwards.

In order to prevent such sudden movement, the pressure chamber 36c and the air line 44c extending through the throttle 39d until the high-pressure regulator 39a must be vented. To this end the harvesting personnel must set the manifold 42 to the **II** position by means of the lever 43, enabling the high pressure in the pipe 44c to flow through the charging valve 39c into the hollow frame in the form of a minimal amount of air via the bypass 44d, the manifold 42 and the air line 44a. Note that the high-pressure regulator 39a is in the shut-off position (see the flow indicating arrow on the pressure regulator 39a) in this position of the manifold 42.

When this construction is used, no loss of pressure medium (air) will occur. All the air is stored in the pneumatic system (the hollow frame 30, the air line is 44a-44d and the pressure regulator 39a) and circulated through the system by means of the manifold 42 and the pressure regulators 39a-39b. No electric driving units are required, and the operating pressure of the pneumatic system only needs to be checked once every week or two weeks. Furthermore, the operating pressure can be increased by pumping air into the hollow frame via the charging valve 39c, using a simple compressor or a hand pump.

In this way any unforeseen loss of pressure caused by leakage or the like can be offset.

After the stack of filled containers has been removed, the harvesting personnel can set the manifold to the **I** position by means of the lever 43, so that air can be carried to the pressure chamber 36c at an operating pressure of 2-3 bar via the air lines 44a-44b, the low-pressure regulator 39b and the air line 44c. As a result, the piston 36b will move downwards and the supporting surface 31 will move upwards; the working height of the supporting surface 31 can be set autonomously by the harvesting personnel via the manifold 42.

As a result of this manner of operation, the harvesting personnel present on the work platform 5 can continue their harvesting work with a minimum loss of time, filling the empty containers 40 present on the work platform 5 with cultivated products and placing the filled containers 40 on the supporting surface 41, which has been raised to its highest position again.

The manifold 42 may also be operated by the personnel present on the floor 15 by means of the long lever 43 (see Figure 5A).

With this construction a working situation is created wherein the harvesting personnel present on the work platform 5 can spend more time on harvesting, and significantly less time needs to be spent on moving, picking up, arranging and unloading empty and filled containers, which must be arranged on the work platform 5 when using the harvesting devices that are currently known. When the harvesting device according to the invention is used, the harvesting personnel can directly discharge a filled container 40 from their working environment on the work platform 5 by placing it on the supporting surface 31. This means a significant improvement both as regards the freedom of movement and as regards the utilisation of the working area, whilst also the productivity of the harvesting personnel will increase significantly.

The simple construction of the frame in which the stack of filled containers 40 can be accommodated also makes it possible for the stack of filled containers 40 (eighteen to twenty in all) to be discharged in a simple and quick manner by only one person, so that it is no longer necessary for other members of the harvesting personnel to assist in removing filled containers and supplying empty containers again. Consequently, also the personnel present on the ground surface 15 for harvesting the lower two cultivating beds 20a and 20b can spend all their time on harvesting, so that their productivity will increase significantly as well.

Another advantage of the harvesting device according to the invention is the simple administration of the work of the harvesting personnel. The constructional dimensions of the frame 30 make it possible to set the frame such that the supporting surface 31 will reach its lowermost position, in which it is present on or just above the ground surface 15, when e.g. eighteen or twenty containers 40 filled with cultivated horticultural products (mushrooms) are present on the supporting surface 31. Thus it is very simple for the grower (the manager of the cultivating facility) to record how many containers 40 have been fiiled by the staff member present on the work platform.

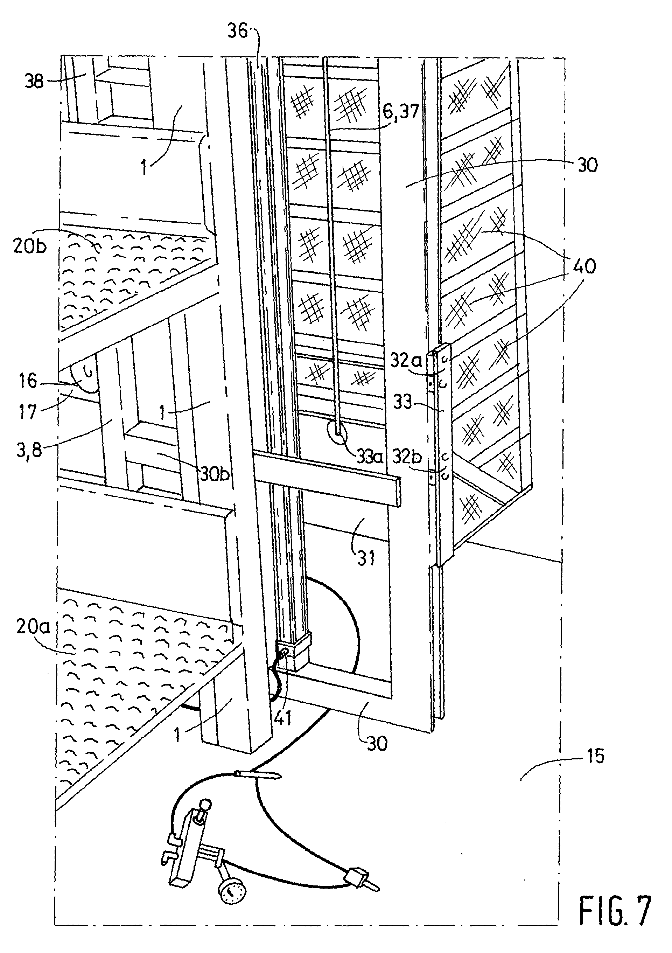

An additional aspect of the invention is shown in Figure 7. Since the frame 30 is mounted to the sides of the support structures 3 by means of the horizontal members 30a-30b, the frame 30 will extend beyond the cultivating rack when the support structures 3 is moved over the guide rail 2 to its extreme horizontal position along the cultivating rack. In this way the frame 30 will not block access to part of the cultivating beds 20a-20f. The frame 30 according to the invention not only improves the working conditions on the work platform 5, but also the productivity of the harvesting personnel, whilst in addition it does not block access to the cultivating beds 20a-20f. On the contrary, since the frame 30, together with the supporting surface 31 and the filled containers 40 that may be present thereon, extends beyond the cultivating rack 1 upon movement of the support structure 3 in horizontal direction along the guide rail 2-17 (Figure 1), the cultivating beds 20a-2f will be optimally accessible to the harvesting personnel when using the harvesting device according to the invention, which further increases the harvesting productivity.

Another aspect of the invention is shown in the partial views of Figures 5B and 5C in combination with Figures 4A and 4B. According to one aspect of the invention, the supporting surface 31 is positioned in the frame 30 at a slight angle (the angle α in Figure 5C) relative to the horizontal plane of the ground surface 15. The supporting surface may e.g. be provided with at least one spacer 29 for the stacked containers 40. As a result of these two measures, the stacked containers 40 will lean towards the cultivating rack during stacking, as a result of which the stability of the stacked containers 40 on the supporting surface 31 is enhanced and unforeseen toppling over of the stacked containers 40 is prevented in large measure.

## Claims

1. A device for use in cultivating facilities, for example for the harvesting in containers of horticultural products, such as mushrooms, cultivated in cultivating racks, which device comprises a support structure that can be movably suspended from at least one guide fixed to the cultivating rack, as well as a working platform mounted in the support structure, which can be adjusted for height by driving means, **characterized in that** the support structure comprises a vertically extending frame for accommodating stacked containers filled with the harvested cultivated horticultural products.

2. A device according to claim 1, **characterized in that** the frame accommodates a vertically movable supporting surface for the stack of containers.

3. A device according to claim 2, **characterized in that** said supporting surface is movable in downward direction under the influence of the weight of the containers stacked thereon.

4. A device according to claim 2 or 3, **characterized in that** the supporting surface can be as far down as the floor of the cultivating facility.

5. A device according to any one or more of the claims 2 - 4, **characterized in that** the frame is provided with guides for the vertically movable supporting surface.

6. A device according to any one of the claims 2 - 5, **characterized in that** the supporting surface can be moved in upward direction by return means.

7. A device according to claim 6, **characterized in that** said return means comprise at least one spring.

8. A device according to claim 7, **characterized in that** said return means comprise at least one air cylinder.

9. A device according to claim 8, **characterized in that** the frame is a hollow frame, and said at least one air cylinder is in communication with the hollow frame, which functions as a reservoir for compressed air.

10. A device according to claim 9, **characterized in that** an adjustable pressure valve is fitted between said at least one cylinder and said hollow frame, which pressure valve can be opened temporarily under the influence of the weight of a container filled with the harvested horticultural products for the transfer of air from the air cylinder to the hollow frame.

11. A device according to claim 10, **characterized in that** the frame comprises a controllable discharge valve for discharging air from the frame to the air cylinder for the purpose of moving the supporting surface in upward direction.

12. A device according to any one or more of the preceding claims, **characterized in that** the supporting surface occupies a slightly inclined position with respect to the horizontal plane in the frame.

13. A device according to claim 12, **characterized in that** the supporting surface is provided with at least one spacer for the stack of containers.

14. A device according to any one or more of the preceding claims, **characterized in that** the frame is open on the side remote from the cultivating rack.

15. A device according to any one or more of the preceding claims, **characterized in that** the frame can be detachably connected to the support structure.

16. A frame suitable for a device for use in cultivating facilities, for example for the harvesting in containers of horticultural products cultivated in cultivating racks, as defined in any one or more of the preceding claims.
